Europäisches Patentamt

European Patent Office

Office européen des brevets

(19)

(11)     EP 0 778 545 B1

(12)                        **FASCICULE DE BREVET EUROPEEN**

(45) Date de publication et mention
de la délivrance du brevet:
**23.08.2000   Bulletin 2000/34**

(51) Int Cl.[7]: **G06T 7/20**

(21) Numéro de dépôt: **96402632.2**

(22) Date de dépôt: **05.12.1996**

(54) **Procédé et dispositif d'estimation de mouvement**

Verfahren und Vorrichtung zur Bewegungsschätzung

Movement estimation process and device

(84) Etats contractants désignés:
**DE FR GB IT**

(30) Priorité: **06.12.1995   FR 9514433**

(43) Date de publication de la demande:
**11.06.1997   Bulletin 1997/24**

(73) Titulaire: **THOMSON multimedia
92648 Boulogne Cédex (FR)**

(72) Inventeurs:
• **Pirson, Alain
92050 Paris la Defense Cedex (FR)**
• **Thomas, Pierre-Xavier
92050 Paris la Defense Cedex (FR)**

(74) Mandataire: **Ruellan-Lemonnier, Brigitte et al
THOMSON multimedia,
46 quai A. Le Gallo
92648 Boulogne Cédex (FR)**

(56) Documents cités:
• **MICROPROCESSORS AND MICROSYSTEMS,
vol. 17, no. 7, Septembre 1993, LONDON GB,
pages 425-434, XP000397915 AMANDA
RICHARDSON ET AL.: "Sti 3220 motion
estimation processor"**
• **PROCEEDINGS OF THE 1995 INTERNATIONAL
CONFERENCE ON ACOUSTICS, SPEECH, AND
SIGNAL PROCESSING; MAY 9-12 ,1995,
DETROIT (US);IEEE ,NEW YORK(US), pages
3283-3286, XP000534759 ALAIN PIRSON ET AL.:
"A programmable motion estimation processor
for full search block matching"**
• **PROCEEDINGS OF THE 1995 INTERNATIONAL
CONFERENCE ON ACOUSTICS, SPEECH AND
SIGNAL PROCESSING; MAY 9-12, 1995,
DETROIT (US) ;IEEE ,NEW YORK(US), pages
3299-3302, XP000534762 MEI-CHENG LU ET AL.:
"Semi-systolic array based motion estimation
processor design"**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

L'invention a pour objet un procédé d'estimation de mouvement par blocs dans un système comprenant a lignes de b réseaux de calcul d'une fonction d'erreur entre des blocs courants et des blocs d'une fenêtre de recherche, chaque réseau possédant des moyens de mémorisation en parallèle de x blocs pour lesquels l'évaluation de la fonction d'erreur est effectuée respectivement lors de x passes. L'invention a aussi pour objet un dispositif de mise en oeuvre de ce procédé.

L'invention s'applique dans le domaine de la compression d'images et de la conversion de standards.

Il existe de nombreux systèmes de compression d'images basés sur un traitement par blocs de pixels. Un moyen pour réduire la redondance temporelle entre images est de recourir à l'estimation de mouvement, procédé consistant à déterminer bloc par bloc d'une image à compresser quels sont les blocs les plus ressemblants dans une image précédente ou à venir. La relation entre un bloc courant et le bloc le plus ressemblant d'une autre image est définie par un vecteur mouvement. Les coordonnées de ce vecteur correspondent à la différence de coordonnées des deux blocs.

Diverses méthodes de détermination des vecteurs mouvement sont connues, requérant plus ou moins de calculs et donnant des vecteurs plus ou moins précis. Une de ces méthodes (dite "par appariement de blocs" ou "block matching" en anglais) consiste à comparer systématiquement le bloc courant à tous les blocs de même taille d'une fenêtre de recherche d'une image précédente, cette fenêtre étant par exemple centrée sur la position du bloc courant rapportée à l'image précédente.

La comparaison se fait en calculant pour chaque appariement la valeur d'une fonction d'erreur. Le vecteur mouvement correspondra à la valeur la plus petite de cette fonction sur l'ensemble des appariements. Des fonctions couramment utilisées sont la somme des valeurs absolues des différences des pixels entre blocs appariés, ou encore la somme des carrés des différences.

L'estimation de mouvement requiert généralement une puissance de calcul élevée, qui augmente avec la précision demandée et avec l'amplitude autorisée des vecteurs mouvement. La demande de brevet français FR 94 10158 décrit un processeur d'estimation de mouvement adapté à effectuer des calculs à des débits élevés. Ce document concerne notamment des réseaux d'éléments de calcul de la fonction d'erreur. Un avantage de ces réseaux est qu'ils sont modulaires et peuvent facilement être mis en série ou en parallèle et qu'ils peuvent traiter chacun deux blocs en parallèle.

Se pose la question de l'organisation des blocs courants dans de tels réseaux, en vue d'en améliorer les performances.

L'invention concerne un procédé d'estimation de mouvement par blocs dans un système comprenant a lignes de b réseaux de calcul d'une fonction d'erreur entre des blocs courants et des blocs d'une fenêtre de recherche, chaque réseau possédant des moyens de mémorisation en parallèle de x blocs pour lesquels l'évaluation de la fonction d'erreur est effectuée respectivement lors de x passes, ledit procédé étant caractérisé en ce qu'il comprend les étapes:

- de sélection d'un groupe de x*a*b blocs dans une image courante et de séparation de ce groupe en x tranches verticales de a*b blocs,
- de mémorisation de chaque tranche dans les moyens de mémorisation correspondant à une même passe,
- de chargement d'une bande de la fenêtre de recherche correspondant à l'ensemble de ces blocs dans une mémoire d'alimentation desdits réseaux,
- lors d'une passe, d'adressage de ladite mémoire d'alimentation en lecture vers lesdits réseaux de la section de la bande correspondant à la tranche de blocs traités durant cette passe.

Les bandes de pixels de la fenêtre de recherche sont mémorisées dans une mémoire qui alimentera les réseaux de calcul. Les bandes mémorisées contiennent des pixels des fenêtres de recherche de l'ensemble des blocs courants stockés dans les réseaux.

Selon le procédé inventif, on ne lit pour effectuer les calculs liés à une passe que les sections de bande correspondant à la tranche de bloc traitée lors de cette passe, sans devoir lire des sections de bandes se rapportant uniquement à d'autres passes.

Le fait de traiter des tranches verticales de blocs permet de réduire la largeur de la bande utile à lire par passe dans la mémoire correspondante. De ce fait, le nombre de cycles de calcul par passe se trouve aussi réduit.

Selon un mode de réalisation particulier, le groupe de blocs courants choisi possède la forme d'un rectangle dont le facteur de forme est choisi proche de celui de la fenêtre de recherche correspondant à un bloc.

On a trouvé que cette caractéristique permet de réduire le nombre de cycles de calcul à effectuer pour traiter tous les blocs.

L'invention concerne également un dispositif d'estimation de mouvement par blocs comportant d'une part un réseau matriciel de calcul d'une fonction d'erreur, ledit réseau comportant des éléments de mémorisation de plusieurs blocs de pixels courants et des moyens de commutation entre les éléments de mémorisation correspondant aux différents blocs, d'autre part une mémoire d'alimentation dudit réseau en pixels d'une fenêtre de recherche, reliée audit réseau, caractérisé en ce que

ladite mémoire est une mémoire à accès aléatoire,
ladite mémoire contient une bande de la fenêtre de recherche correspondant à l'ensemble des blocs courants mémorisés dans le réseau,
ledit dispositif comportant des moyens d'adressage en lecture de sections partielles de ladite bande de la mémoire en fonction du bloc traité par ledit réseau, lesdites sections étant introduites colonne par colonne dans ledit réseau.

D'autres caractéristiques et avantages de l'invention apparaîtront à travers la description d'un exemple de réalisation particulier non limitatif illustré par les figures jointes.
Parmi ces figures,

- la figure 1 représente une fenêtre de recherche dans une image par rapport à la position du bloc courant,
- la figure 2 représente le découpage d'une fenêtre de recherche en bandes de pixels et en blocs,
- la figure 3 représente un diagramme-bloc d'un réseau de calcul de valeurs de fonction d'erreur,
- la figure 4 représente un diagramme-bloc d'un élément "S" du réseau de la figure 3,
- la figure 5 représente un réseau de calcul comportant une ligne de huit éléments et destiné à illustrer le fonctionnement du réseau,
- les figures 6(a) à 6(e) représentent les dispositions des blocs selon le présent exemple de réalisation,
- les figures 6(f) et 6(g) représentent le stockage des blocs des figures 6(a) à 6(f) dans la matrice de réseaux conforme à l'exemple de réalisation,
- la figure 7 représente les bandes de la fenêtre de recherche autour de deux blocs adjacents et la bande résultante,
- la figure 8 représente le schéma d'un circuit comprenant huit réseaux de quatre fois huit pixels, organisés en quatre lignes de deux réseaux,
- la figure 9 représente des droites indiquant les différences de cycles de calcul en fonction de la disposition des blocs.

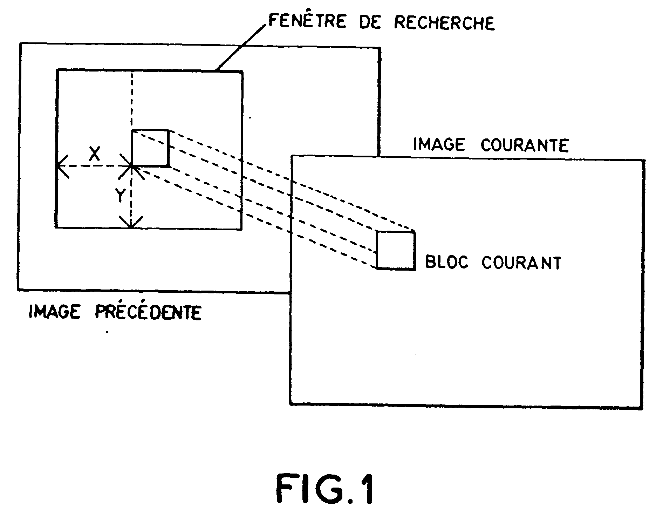

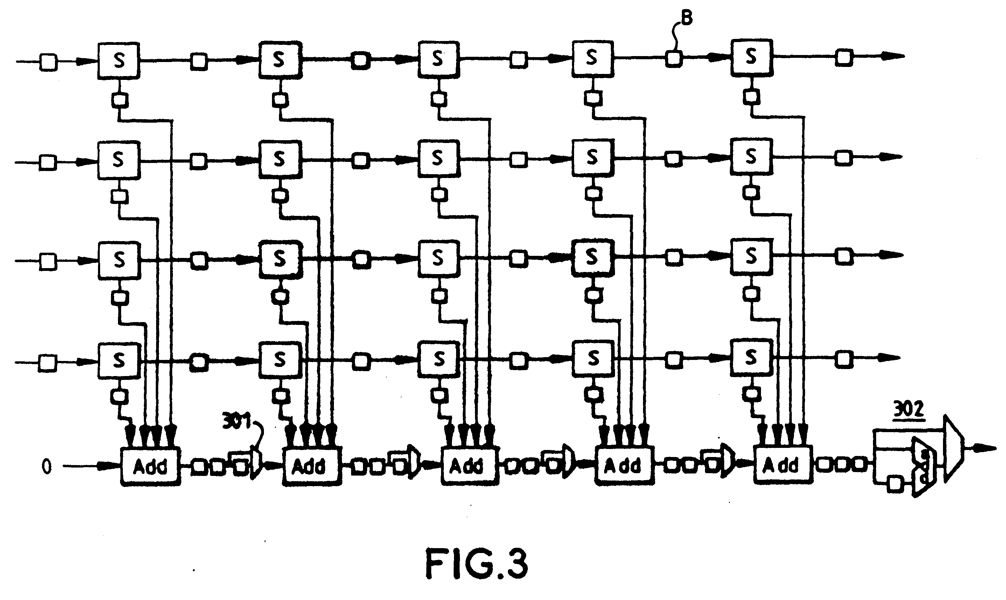

La figure 1 illustre la position de la fenêtre de recherche autour de la position rapportée à une image précédente d'un bloc de l'image courante dont le mouvement est à estimer.

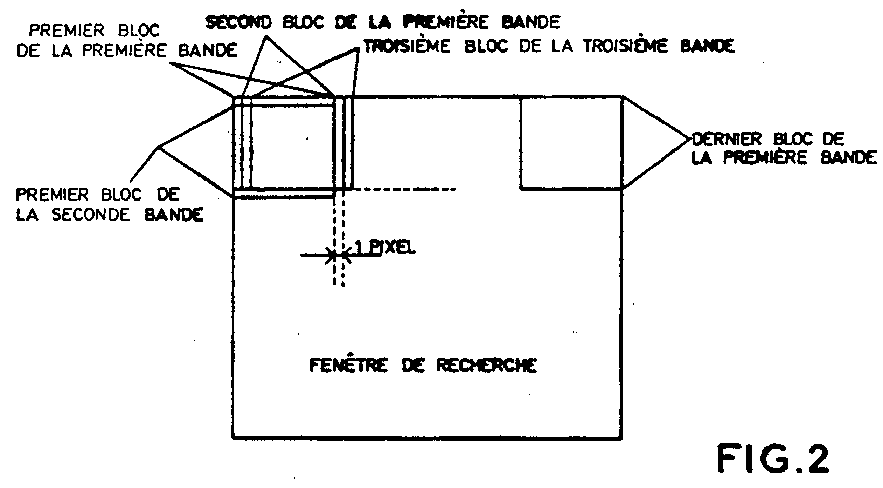

La figure 2 illustre le découpage d'une fenêtre de recherche en bandes dans le cadre d'une estimation de mouvement.
Si l'on travaille avec des blocs courants ayant une hauteur de 4 pixels, la première bande correspond aux quatre première lignes de la fenêtre de recherche, tandis que la seconde bande correspond aux lignes 2 à 5. L'on voit qu'entre deux bandes successives, une seule ligne de pixels diffère.
Si l'on suppose que la taille d'un bloc est de 4 pixels en hauteur et de 8 pixels en largeur, alors une bande de 28 colonnes et de 4 lignes contient 21 blocs de même taille. Bien sûr, ces blocs ne sont pas disjoints: deux blocs consécutifs ne diffèrent que d'une colonne de pixels. Le réseau de calcul devra donc fournir 21 valeurs de la fonction d'erreur lors du traitement de cette bande, une pour chaque position possible de bloc dans la bande.
Selon le présent exemple de réalisation, le circuit d'estimation de mouvement comprend des réseaux d'éléments de calcul tels que ceux décrits dans la demande de brevet français FR 94 10158, à laquelle on se référera pour plus de détails.
Un réseau d'éléments de calcul est illustré par la figure 3. Ce réseau comporte des lignes de cellules S reliées en série par des buffers B, un additionneur "Add" étant associé à chaque colonne de cellules S, une sortie de chaque cellule S étant reliée à l'additionneur de la colonne correspondante à travers un buffer B. Les additionneurs sont eux-mêmes reliés en série à travers trois buffers en série dont un peut être court-circuité par un circuit de dérivation 301. En dernier lieu, le réseau comporte un circuit de dérivation final 302.
La fonction d'un tel réseau est de calculer des valeurs d'une fonction d'erreur entre un bloc de pixels d'une image à compresser et des blocs de même taille d'une image passée ou future, dite image de référence. Les blocs de l'image de référence correspondent généralement aux blocs d'une fenêtre de recherche centrée autour de la position du bloc courant rapportée à cette image de référence.

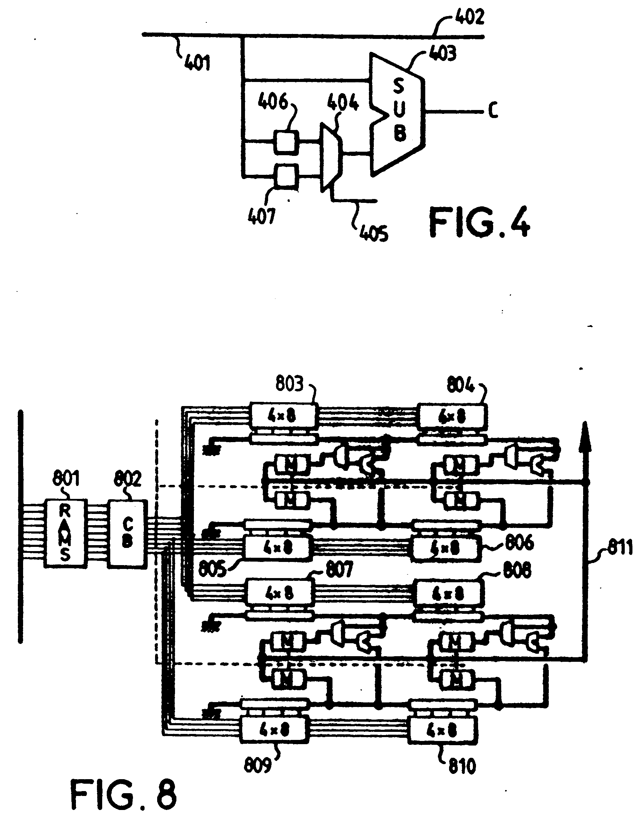

La figure 4 est un schéma fonctionnel d'une cellule de calcul S.
Cette cellule comporte une entrée 401 directement reliée à une sortie 402. Cette ligne correspond aux valeurs de pixels de la fenêtre de recherche.
La cellule comporte également deux buffers 406 et 407, dans lesquels on mémorise les valeurs de pixels soit d'un même bloc, soit de deux blocs différents. La sortie de ces buffers est multiplexée par un multiplexeur 404, commandé par une ligne 405, vers une entrée d'un circuit soustracteur-valeur absolue 403, dont la sortie C est dirigée vers le buffer B (voir figure 1) reliant la cellule S à son additionneur attitré. L'autre entrée du circuit 403 est reliée à la ligne connectant l'entrée 401 et la sortie 402.

Tandis que les pixels du bloc de l'image courante sont mémorisés chacun dans une cellule S, les pixels de la fenêtre de recherche sont amenés à ces cellules S à travers les buffers B.

La fenêtre de recherche est découpée en bandes de 4 pixels de hauteur, ces bandes étant insérées colonne de pixels par colonne de pixels dans le réseau, se propageant ainsi d'une colonne à chaque cycle de calcul.

On suppose dans un premier temps qu'un seul bloc courant est mémorisé dans le réseau, c'est à dire qu'un des deux buffers 206 et 207 de chaque cellule S n'est pas utilisé.

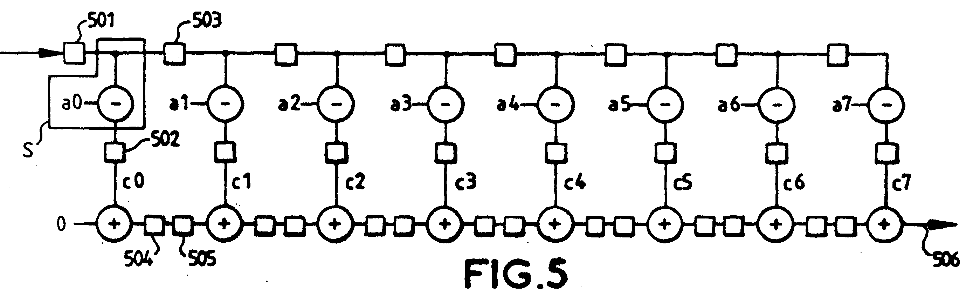

La figure 5 illustre un réseau d'éléments de calcul de 8 colonnes et d'une ligne. Ce réseau simple servira à faire comprendre le mécanisme des calculs (le circuit de dérivation 301 est mis en oeuvre pour court-circuiter le troisième buffer entre chaque paire d'additionneurs). Le fonctionnement d'un réseau plus grand est tout à fait similaire.

On désignera par bx la valeur d'un pixel de la fenêtre de recherche et par ax la valeur d'un pixel du bloc courant. Les valeurs de pixel a sont déjà mémorisées dans le réseau. Une valeur b est présentée à l'entrée du réseau à chaque cycle. Le tableau 1 représente l'évolution des sorties C de chaque cellule S au niveau des buffers.

Les caractères en gras représentent les résultats à ajouter pour obtenir finalement une valeur de la fonction d'erreur pour le bloc courant.

TABLEAU 1

| Cycle | C0 | C1 | C2 | C3 | C4 | C5 | C6 | C7 |
|-------|------|------|------|------|------|------|------|------|
| 0 | --- | --- | --- | --- | --- | --- | --- | --- |
| 1 | **\|b0-a0\|** | --- | --- | --- | --- | --- | --- | --- |
| 2 | \|b1-a0\| | \|b0-a1\| | --- | --- | --- | --- | --- | --- |
| 3 | \|b2-a0\| | **\|b1-a1\|** | \|b0-a2\| | --- | --- | --- | --- | --- |
| 4 | \|b3-a0\| | \|b2-a1\| | \|b1-a2\| | \|b0-a3\| | --- | --- | --- | --- |
| 5 | \|b4-a0\| | \|b3-a1\| | **\|b2-a2\|** | \|b1-a3\| | \|b0-a4\| | --- | --- | --- |
| 6 | \|b5-a0\| | \|b4-a1\| | \|b3-a2\| | \|b2-a3\| | \|b1-a4\| | \|b0-a5\| | --- | --- |
| 7 | \|b6-a0\| | \|b5-a1\| | \|b4-a2\| | **\|b3-a3\|** | \|b2-a4\| | \|b1-a5\| | \|b0-a6\| | --- |
| 8 | \|b7-a0\| | \|b6-a1\| | \|b5-a2\| | \|b4-a3\| | \|b3-a4\| | \|b2-a5\| | \|b1-a6\| | \|b0-a7\| |
| 9 | \|b8-a0\| | \|b7-a1\| | \|b6-a2\| | \|b5-a3\| | **\|b4-a4\|** | \|b3-a5\| | \|b2-a6\| | \|b1-a7\| |
| 10 | \|b9-a0\| | \|b8-a1\| | \|b7-a2\| | \|b6-a3\| | \|b5-a4\| | \|b4-a5\| | \|b3-a6\| | \|b2-a7\| |
| 11 | \|b10-a0\| | \|b9-a1\| | \|b8-a2\| | \|b7-a3\| | \|b6-a4\| | **\|b5-a5\|** | \|b4-a6\| | \|b3-a7\| |
| 12 | \|b11-a0\| | \|b10-a1\| | \|b9-a2\| | \|b8-a3\| | \|b7-a4\| | \|b6-a5\| | \|b5-a6\| | \|b4-a7\| |
| 13 | \|b12-a0\| | \|b11-a1\| | \|b10-a2\| | \|b9-a3\| | \|b8-a4\| | \|b7-a5\| | **\|b6-a6\|** | \|b5-a7\| |
| 14 | \|b13-a0\| | \|b12-a1\| | \|b11-a2\| | \|b10-a3\| | \|b9-a4\| | \|b8-a5\| | \|b7-a6\| | \|b6-a7\| |
| 15 | \|b14-a0\| | \|b13-a1\| | \|b12-a2\| | \|b11-a3\| | \|b10-a4\| | \|b9-a5\| | \|b8-a6\| | **\|b7-a7\|** |

Pendant le cycle 0, la valeur b0 est mémorisée dans le premier buffer B (référence 501) en entrée de réseau. Ce n'est qu'au cycle 1 que le résultat |b0-a0| fourni par la première cellule S à sa sortie C0 est mémorisé dans le buffer 502. Pendant le cycle 1, la valeur b0 est également mémorisée par le second buffer B 503.

A un moment donné du fonctionnement du réseau, on devra retrouver à la sortie du dernier additionneur la somme de toutes les valeurs absolues des différences correspondant à une position donnée du bloc courant (qui ici se réduit à une ligne) dans la fenêtre de référence. Les résultats qui doivent s'ajouter au niveau des additionneurs pour la première de ces positions sont indiqués en gras dans le tableau.

Cette fonction d'accumulation conditionne le retard qui doit être introduit par les buffers 504 entre les additionneurs. On voit facilement que l'on doit introduire un retard de deux cycles pour que la propagation des résultats au niveau des additionneurs se fasse de manière adéquate. Ceci explique la présence de deux buffers entre chaque additionneur.

Au bout du quinzième cycle, la valeur de la fonction d'erreur pour la première position du bloc courant est disponible à la sortie 506 du réseau. Ce délai représente le temps nécessaire pour que la bande de pixels de la fenêtre de recherche se propage jusqu'au bout du réseau. Ensuite, une nouvelle valeur de la fonction d'erreur est disponible à chaque cycle, jusqu'à ce que le dernier pixel b de la première bande de la fenêtre de recherche se soit propagé jusqu'au bout du réseau. La seconde bande aura déjà commencé à se propager, de sorte qu'il n'y a pas à priori de temps mort entre deux bandes successives: la dernière valeur de la fonction d'erreur correspondant à la première bande est suivie de la première valeur de la fonction d'erreur de la seconde bande.

Dans les évaluations du nombre de cycles nécessaires pour calculer les résultats correspondant à une bande, on négligera par la suite les cycles "à vide" correspondant au remplissage initial du réseau.

Par conséquent, si une bande contient Sx positions différentes possibles pour un bloc, qu'un bloc possède n colonnes de pixels, alors le nombre de cycles de calcul nécessaires pour obtenir les résultats est:

$$NCPP = Sx + n - 1$$

De manière plus générale, si l'on suppose que le réseau peut contenir plus de deux blocs en série (en l'occurrence n), par exemple lorsque deux réseaux tel que celui de la figure 5 sont mis en série, alors si Nx désigne le nombre de blocs:

$$NCPP = Sx + n*Nx - 1$$

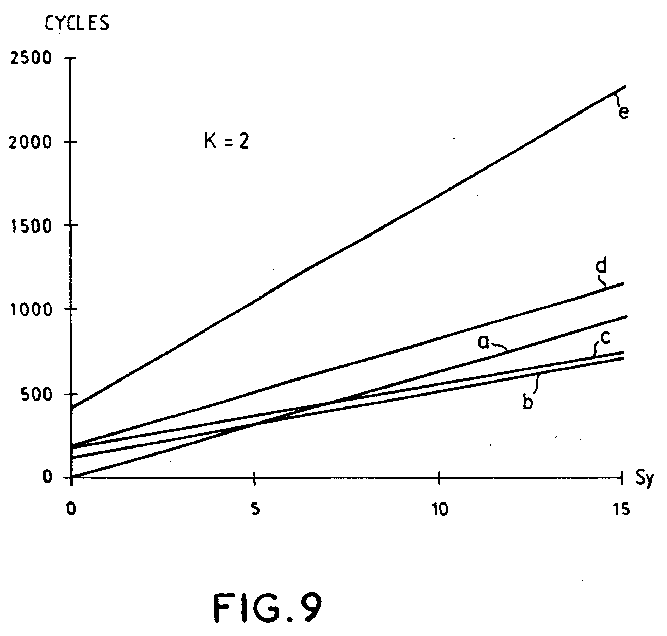

La figure 8 illustre la disposition de huit réseaux composés respectivement de 4 lignes de 8 éléments de calcul en matrice de quatre lignes de deux réseaux chacun. Ces réseaux sont alimentés par dix mémoires-lignes vives 801 à travers un circuit de commutation 802. A un moment donné, seulement huit mémoires 801 sont connectées à travers le circuit 802 aux lignes connectées aux entrées des réseaux. Chacune de ces lignes correspond à une valeur de pixel. Tandis que huit mémoires 801 sont lues, les deux mémoires 801 restantes sont remplies avec les lignes qui diffèrent entre les bandes en cours de lecture et les bandes nécessaires immédiatement après.

Deux réseaux situés sur une même ligne peuvent être considérés comme ne formant qu'un seul réseau de taille horizontale double, ou deux réseaux distincts. Selon le cas, les résultats des additions en fin d'un premier réseau sont soit transmis au second, soit récupérés directement par les cellules "M", qui parmi l'ensemble des valeurs de fonctions d'erreur déterminent la plus petite valeur pour un bloc courant donné.

De manière également simple, on peut grâce à des additionneurs en amont des cellules "M" additionner les valeurs de la fonction d'erreur pour deux réseaux verticalement superposés pour former un réseau de taille verticale double.

Il devient ainsi facile d'adapter le circuit de la figure 8 à des blocs courants de taille différente: blocs de 4*8, de 4*16, de 8*8, de 16*16 pixels...

Selon le présent exemple de réalisation, les mémoires-lignes sont des mémoires vives adressables dans le sens où l'on peut lire un pixel à n'importe laquelle des adresses de ces mémoires.

L'adressage des mémoires-ligne est réalisé par un microcontrôleur 812. Ce microcontrôleur gère aussi le multiplexeur 404 des cellules "S".

Selon un autre mode de fonctionnement du réseau de la figure 5 que celui décrit précédemment en liaison avec cette figure, les pixels de deux blocs sont mémorisés en parallèle dans les cellules S. Ceci veut dire qu'il devient possible de commuter les réseaux de la figure 8 entre deux groupes de huit blocs de 4*8 pixels mémorisés en parallèle, indépendamment des bandes de la fenêtre de recherche introduites dans ces réseaux. Comme cela a été vu au niveau des commandes internes des cellules "S", cette commutation peut se faire au niveau de chaque pixel.

Les calculs concernant un groupe de blocs sont appelés une "passe" dans ce qui suit. Tous les pixels nécessaires aux calculs liés au premier groupe de blocs sont insérés dans les réseaux lors d'une première passe avant que les pixels nécessaires pour le second groupe ne soient insérés lors d'une seconde passe.

En choisissant judicieusement les blocs de façon à ce que leurs fenêtres de recherche se recoupent, il est possible de réduire la bande passante nécessaire pour alimenter les mémoires de ligne 801.

Seize blocs de 4*8 pixels doivent être sélectionnés dans l'image courante pour être stockés dans le réseau. Etant donné que la fenêtre de recherche doit avoir la surface la plus réduite possible, on choisira des blocs formant un rectangle. Il y a donc cinq possibilités:

    (a) Une ligne de seize blocs
    (b) Deux lignes de huit blocs
    (c) Quatre lignes de quatre blocs
    (d) Huit lignes de deux blocs
    (e) Seize lignes d'un bloc

Selon le présent mode de réalisation, la restriction suivante est utilisée pour déterminer le placement des seize blocs dans le réseau:

On cherche à traiter la moitié droite d'une série de blocs adjacents lors d'une passe, et la moitié gauche lors de l'autre passe.

L'avantage de l'application de cette règle sera vu plus tard. Il y a des cas limites où elle n'est pas applicable.

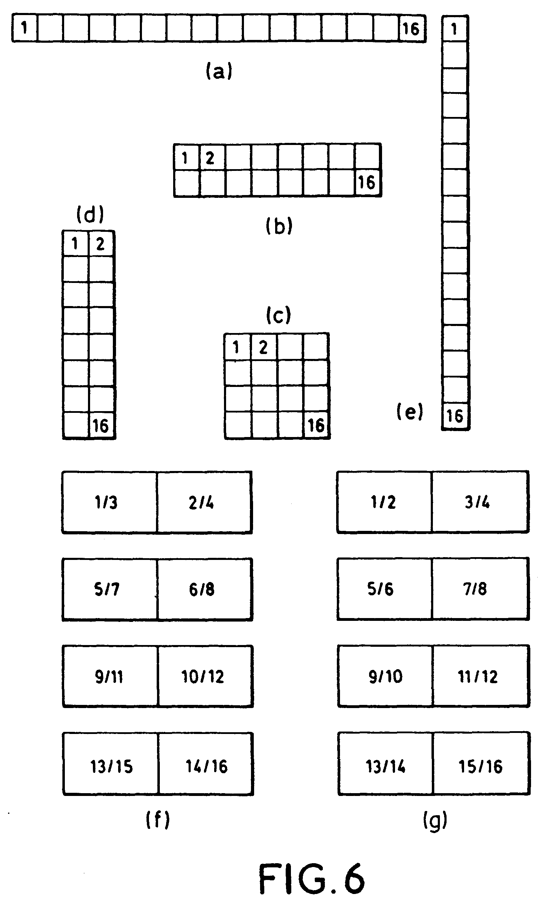

L'application de cette règle dans le cas présent est illustrée par les figures 6(a) à (g). Les figures 6(a) à 6(e) représentent les cinq dispositions de blocs courants définies précédemment, tandis que les figures 6(f) et 6(g) représentent respectivement les mémorisations de ces blocs dans la matrice de réseaux de la figure 8. La figure 6(f) se rapporte aux dispositions des figures 6(a), 6(b), 6(c) et 6(e), tandis que la figure 6(g) se rapporte à la disposition de la figure 6(d).

Dans les cas (a), (b) et (c), les séries de blocs adjacents sont toujours composés de quatre blocs: (1/2/3/4) par exemple forment une série de blocs adjacents, les deux blocs les plus à gauche étant mémorisés dans la première ligne de réseaux de la matrice dans les buffers correspondant à la première passe, tandis que les deux blocs les plus à droite sont mémorisés dans les buffers correspondant à la seconde passe.

Il est bien évident que si la matrice comportait quatre réseaux par ligne, les séries de blocs adjacents comporteraient chacune huit blocs.

Pour que la règle édictée ci-dessus puisse être respectée dans le cas (d), cas où chaque ligne de blocs ne comporte que deux blocs, il faut que les deux blocs d'une même ligne soient traités lors de passes différentes, comme cela est illustré à la figure 6(g): les blocs 1 et 2 sont mémorisés dans le premier réseau de la première ligne, les blocs 3 et 4 dans le second...

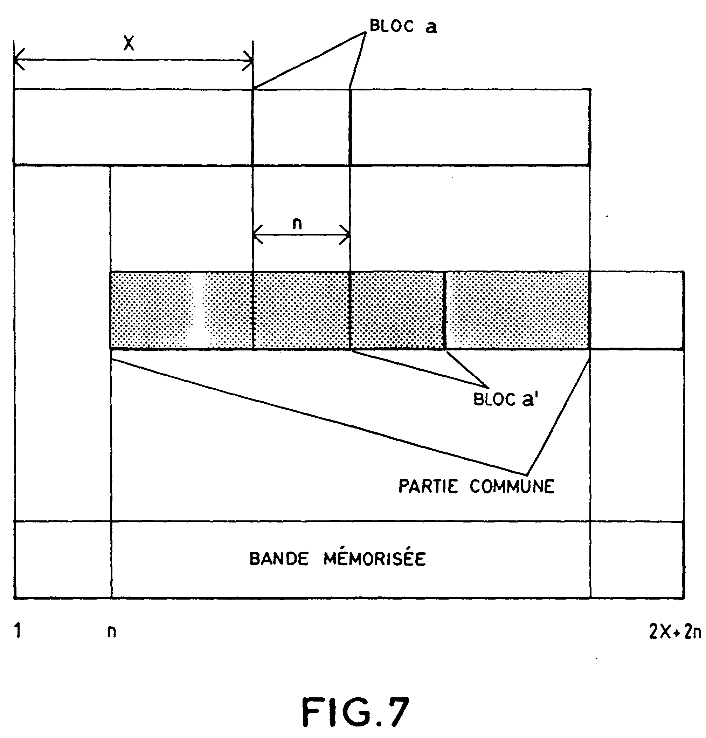

L'avantage procuré par la mise en oeuvre de cette répartition des blocs peut être expliqué en relation avec la figure 7.

Comme cela a été mentionné précédemment, une fenêtre de recherche est définie par la position du bloc courant, rapportée à une autre image, la précédente selon le présent exemple. On suppose dans ce qui suit qu'une fenêtre de recherche est centrée sur un bloc et que la fenêtre de recherche possède une marge horizontale de X pixels de part et d'autre du bloc (voir figure 1). Deux bandes de fenêtres de recherche concernant deux blocs a et a' adjacents se recoupent sur une partie importante de leur longueur. Ceci est illustré par la figure 7, la partie hachurée de la bande centrale étant la partie commune entre les deux bandes correspondant respectivement aux deux blocs a et a'.

Pour que les estimations de mouvement concernant ces deux blocs puissent être menées à terme de façon adéquate, la bande mémorisée dans les mémoires-ligne 801 doit être celle qui figure en bas de la figure 7. En l'occurence, les n premières et dernières colonnes de pixels de la bande ne serviront respectivement que lors d'une seule passe et seront inutiles pendant l'autre passe.

Les mémoires-ligne contenant la bande de pixels étant adressables colonne de pixels par colonne de pixels, on fera débuter la partie de la bande insérée dans la matrice de réseaux à des colonnes différentes suivant la passe. Si les calculs liés au bloc a de la figure 7 sont effectués lors de la première passe, alors la bande sera insérée à partir de la colonne 1 pendant cette première passe, et ce jusqu'à la colonne 2X+n. De même, si les calculs liés au bloc a' sont effectués lors de la seconde passe, la partie de la bande insérée pendant cette passe ne débutera qu'à la colonne n, et ira jusqu'à la colonne 2X+2n.

Sur une passe, on gagne donc n cycles de calcul par rapport à l'insertion de la bande entière.

Dans ce cas, le nombre de cycles de calcul par passe est donc:

$$NCPP = Sx+n*Nx/2-1$$

où Nx représente le nombre de blocs adjacents horizontalement. Nx est égal à 2 dans l'exemple de la figure 7. Les cas Nx=16, Nx=8 et Nx=4 sont illustrés respectivement par les dispositions (a), (b) et (c) de la figure 6. En ce qui concerne la figure 6(d), Nx est égal à 2.

Lorsqu'il n'y a pas de blocs adjacents, ce qui est le cas de la disposition (e) de la figure 6, cet avantage n'est pas exploitable. En effet, la bande entière devra être insérée dans le réseau au cours de chaque passe. Dans ce cas,

$$NCPP = Sx+n*Nx-1 \text{ avec } Nx = 1 \ .$$

Le nombre de passes à effectuer est égal au double du nombre de bandes requises pour couvrir verticalement la fenêtre de recherche nécessaire à tous les blocs, étant donné que deux blocs sont mémorisés par réseau.

$$NPAS = 2*(Sy + m*(Ny-1))$$

où Sy représente le nombre de positions d'un bloc le long d'une verticale de la fenêtre de recherche, où m représente le nombre de lignes par bloc et où Ny représente le nombre de blocs adjacents verticalement.

Le nombre de cycles de calcul dans chacun des 5 cas exposés est donc:

$$(a),(b),(c),(d): \quad NCYCLE = 2*(Sx+n*Nx/2-1)*(Sy+m*(Ny-1))$$

$$(e): \quad NCYCLE = 2*(Sx+n-1)*(Sy+m*(Ny-1))$$

En faisant l'application numérique dans les cinq cas précédemment cités, avec des blocs de 4 lignes et 8 colonnes et en posant Sx=KSy, où k est le facteur de forme de la fenêtre de recherche, on obtient les nombres de cycles pour traiter l'ensemble des 16 blocs:

$$(a) \quad NCYCLE = 2*(kSy+63)*Sy \quad = 2[kSy^2+63Sy]$$

$$(b) \quad NCYCLE = 2*(kSy+31)*(Sy+4) \quad = 2[kSy^2+(4k+31)Sy+124]$$

$$(c) \quad NCYCLE = 2*(kSy+15)*(Sy+12)$$

$$= 2[kSy^2+(12k+15)Sy+180]$$

$$(d) \quad NCYCLE = 2*(kSy+7)*(Sy+28) \quad = 2[kSy^2+(28k+7)Sy+196]$$

$$(e) \quad NCYCLE = 2*(kSy+7)*(Sy+60) \quad = 2[kSy^2+(60k+7)Sy+420]$$

Pour la comparaison du nombre des cycles de calcul en fonction de Sy et de k, le facteur 2 ainsi que le terme au carré sont inutiles. Les nombres de cycles de calcul peuvent donc être représentés de façon relative par des droites.

La figure 9 illustre les courbes correspondantes pour k = 2.

Pour des facteurs de forme couramment employés situés entre 1 et 4, les cas b et c sont les plus intéressants. La solution c sera meilleure que la solution b si (16-8k)Sy>56.

En d'autres termes, pour des fenêtres de recherche se rapprochant d'un carré, la solution c sera choisie, c'est à dire un ensemble de blocs ayant également une disposition en carré. Pour une fenêtre de recherche plus large que haute avec un facteur de forme entre 2 et 4, la solution b sera choisie.

Les facteurs de forme rendant les autres solutions intéressantes sont soit supérieurs à 8 (pour la solution a), soit inférieurs à 0.5 (pour la solution d).

**Revendications**

1. Dispositif d'estimation de mouvement par blocs comportant d'une part un réseau matriciel (300) de calcul d'une fonction d'erreur, ledit réseau comportant des éléments de mémorisation (S, 406, 407) de plusieurs blocs (a, a') de pixels courants et des moyens de commutation (403) entre les éléments de mémorisation correspondant aux différents blocs, d'autre part une mémoire d'alimentation (801) dudit réseau en pixels d'une fenêtre de recherche, reliée audit réseau, caractérisé en ce que

ladite mémoire (801) est une mémoire à accès aléatoire,
ladite mémoire contient une bande de la fenêtre de recherche correspondant à l'ensemble des blocs courants mémorisés dans le réseau (300),
ledit dispositif comportant des moyens d'adressage (812) en lecture de sections partielles de ladite bande de la mémoire en fonction du bloc traité (a, a') par ledit réseau, lesdites sections étant introduites colonne par colonne dans ledit réseau.

**2.** Dispositif selon la revendication 1, caractérisé en ce que ladite fenêtre de recherche correspondant à l'ensemble des blocs courants est égale à la réunion de toutes les fenêtres de recherche correspondant aux blocs pris un à un.

**3.** Dispositif selon l'une des revendications 1 ou 2, caractérisé en ce qu'il comporte a lignes comprenant chacune b réseaux connectés en série, les lignes de réseaux étant connectées en parallèle à ladite mémoire d'alimentation.

**4.** Dispositif selon l'une des revendications 1 à 3, caractérisé en ce que les blocs courants forment un rectangle (Figures 6(a) à 6(e)) dans l'image courante et qu'ils sont mémorisés parallèlement dans le ou les réseaux sous la forme d'un premier groupe de blocs et d'un second groupe de blocs, le premier groupe de blocs correspondant au groupe le plus à gauche et le second groupe de blocs correspondant au groupe le plus à droite.

**5.** Procédé d'estimation de mouvement par blocs dans un système comprenant a lignes de b réseaux de calcul (801 à 810) d'une fonction d'erreur entre des blocs courants et des blocs d'une fenêtre de recherche, chaque réseau possédant des moyens de mémorisation (406, 407) en parallèle de x blocs pour lesquels l'évaluation de la fonction d'erreur est effectuée respectivement lors de x passes, ledit procédé étant caractérisé en ce qu'il comprend les étapes:

- de sélection d'un groupe de x*a*b blocs dans une image courante et de séparation de ce groupe en x tranches verticales de a*b blocs,
- de mémorisation de chaque tranche dans les moyens de mémorisation correspondant à une même passe,
- de chargement d'une bande de la fenêtre de recherche correspondant à l'ensemble de ces blocs dans une mémoire d'alimentation (801) desdits réseaux,
- lors d'une passe, d'adressage de ladite mémoire d'alimentation (801) en lecture vers lesdits réseaux de la section de la bande correspondant à la tranche de blocs traités durant cette passe.

**6.** Procédé selon la revendication 5, caractérisé en ce que ledit groupe de blocs forme un rectangle (figures 6(a) à 6(e)).

**7.** Procédé selon la revendication 6, caractérisé en ce que le facteur de forme dudit rectangle est choisi proche de celui de la fenêtre de recherche correspondant à un bloc.

**Patentansprüche**

**1.** Vorrichtung zur blockweisen Bewegungsschätzung, die einerseits ein matrixförmiges Netzwerk (300) zur Berechnung einer Fehlerfunktion aufweist, wobei das Netzwerk Speicherelemente (S, 406, 407) für mehrere Blöcke (a, a') von laufenden Pixeln und Umschaltmittel (403) zwischen den Speicherelementen aufweist, die den verschiedenen Blöcken entsprechen, und andererseits einen Speicher (801) zum Versorgen des Netzwerks mit Pixeln eines dem Netzwerk zugeordneten Untersuchungsfensters aufweist, dadurch gekennzeichnet, daß

der Speicher (801) ein Speicher mit Zufallszugriff, ein RAM, ist, der Speicher ein Band des Untersuchungsfensters enthält, das der Gesamtheit der in dem Netzwerk (300) gespeicherten laufenden Blöcke entspricht, die Vorrichtung Adressiermittel (812) zum Lesen von Teilbereichen des Bandes des Speichers als Funktion des durch das Netzwerk verarbeiteten Blocks (a, a') aufweist und die Bereiche Spalte für Spalte in das Netzwerk eingegeben werden.

**2.** Vorrichtung nach Anspruch 1, dadurch gekennzeichnet, daß das der Gesamtheit der laufenden Blöcke entsprechende Untersuchungsfenster gleich der Vereinigung aller Untersuchungsfenster ist, die den nacheinander erfaßten Blöcken entsprechen.

**3.** Vorrichtung nach einem der Ansprüche 1 oder 2, dadurch gekennzeichnet, daß sie a Reihen jede mit b in Reihe angeordneten Netzwerken enthält und die Reihen der Netzwerke parallel mit dem Versorgungsspeicher verbunden sind.

**4.** Vorrichtung nach einem der Ansprüche 1 bis 3, dadurch gekennzeichnet, daß die laufenden Blöcke ein Rechteck (Figuren 6(a) bis 6(e)) in dem laufenden Bild bilden und parallel in dem Netzwerk oder den Netzwerken in der Form einer ersten Gruppe von Blöcken und einer zweiten Gruppe von Blöcken gespeichert werden, wobei die erste Gruppe von Blöcken der am weitesten links liegenden Gruppe und die zweite Gruppe von Blöcken der am meisten rechts liegenden Gruppe entspricht.

**5.** Verfahren zur blockweisen Bewegungsschätzung in einem System mit a Reihen von b Netzwerken zur Berechnung (801 bis 810) einer Fehlerfunktion zwischen den laufenden Blöcken und den Blöcken eines Untersuchungsfensters, wobei jedes Netzwerk parallele Speichermittel (406, 407) mit x Blöcken aufweist, für die die Auswertung der Fehlerfunktion jeweils nach x Durchläufen erfolgt, gekennzeichnet durch folgende Schritte:

- Auswahl einer Gruppe von x*a*b Blöcken aus einem laufenden Bild und Trennung dieser Gruppe in x vertikale Scheiben mit a*b Blöcken,
- Speicherung jeder Scheibe in demselben Durchlauf entsprechenden Speichermitteln,
- Laden eines Bandes des Untersuchungsfensters, das der Gesamtheit dieser Blöcke in einen Eingabespeicher (801) der Netzwerke entspricht,
- Adressierung des Versorgungsspeichers (801) beim Lesen des Bereiches des Bandes über die Netzwerke bei einem Durchlauf, das der Scheibe der in diesem Durchlauf verarbeiteten Blöcke entspricht.

**6.** Verfahren nach Anspruch 5, dadurch gekennzeichnet, daß die Gruppe von Blöcken ein Rechteck (Figuren 6(a) bis 6(e)) bildet.

**7.** Verfahren nach Anspruch 6, dadurch gekennzeichnet, daß der Formfaktor des Rechtecks ähnlich demjenigen des einem Block entsprechenden Untersuchungsfensters gewählt wird.

**Claims**

**1.** Device for blockwise estimation of motion including on the one hand a matrix array (300) for calculating an error function, the said array including storage elements (S, 406, 407) for plural blocks (a, a') of current pixels and means (403) for switching between the storage elements corresponding to the various blocks, on the other hand a memory (801) for feeding the said array with pixels of a search window, linked to the said array, characterized in that

the said memory (801) is a random access memory,
the said memory contains a band of the search window corresponding to the entirety of the current blocks stored in the array (300),
the said device including means (812) for read-addressing partial sections of the said band of the memory as a function of the block processed (a, a') by the said array, the said sections being introduced column by column into the said array.

**2.** Device according to Claim 1, characterized in that the said search window corresponding to the entirety of the current blocks is equal to the union of all the search windows corresponding to the blocks taken one by one.

**3.** Device according to one of Claims 1 or 2, characterized in that it includes a lines each comprising b arrays connected in series, the lines of arrays being connected in parallel to the said feed memory.

**4.** Device according to one of Claims 1 to 3, characterized in that the current blocks form a rectangle (Figures 6(a) to 6(e)) in the current image and that they are stored in parallel fashion in the array or arrays in the form of a first group of blocks and of a second group of blocks, the first group of blocks corresponding to the leftmost group and the second group of blocks corresponding to the rightmost group.

**5.** Method of blockwise estimation of motion in a system comprising a lines of b arrays (801 to 810) for calculating an error function between current blocks and blocks of a search window, each array having means of storage (406, 407) in parallel of x blocks for which the evaluation of the error function is performed respectively during x passes, the said method being characterized in that it comprises the steps:

- of selecting a group of x*a*b blocks from a current image and of splitting this group into x vertical slices of a*b blocks,
- of storing each slice in the storage means corresponding to one and the same pass,
- of loading a band of the search window corresponding to the entirety of these blocks into a feed memory (801) of the said arrays,
- during a pass, of read-addressing the said feed memory (801) to the said arrays of the section of the band corresponding to the slice of blocks processed during this pass.

6. Method according to Claim 5, characterized in that the said group of blocks forms a rectangle (Figures 6(a) to 6(e)).

7. Method according to Claim 6, characterized in that the shape factor of the said rectangle is chosen close to that of the search window corresponding to a block.

FENÊTRE DE RECHERCHE

IMAGE COURANTE

BLOC COURANT

IMAGE PRÉCÉDENTE

X

Y

# FIG.1

PREMIER BLOC
DE LA PREMIÈRE BANDE

SECOND BLOC DE LA PREMIÈRE BANDE

TROISIÈME BLOC DE LA TROISIÈME BANDE

PREMIER BLOC DE
LA SECONDE BANDE

DERNIER BLOC DE
LA PREMIÈRE BANDE

1 PIXEL

FENÊTRE DE RECHERCHE

FIG.2

EP 0 778 545 B1

FIG.3

FIG.4

FIG. 8

FIG.5

FIG.6

FIG.7

FIG.9